# EUROPEAN PATENT APPLICATION

(11) **EP 2 722 722 A1**
(43) Date of publication of application: **23.04.2014**
(21) Application number: 11860709.2
(22) Date of filing: 16.06.2011
(51) Int. Cl.: G05D 3/00, H01Q 3/26, G01S 3/56, H01Q 25/00

(54) **PHASED-ARRAY ANTENNA AIMING METHOD AND DEVICE AND PHASED-ARRAY ANTENNA**

(71) Applicant: Huawei Technologies Co., Ltd., Shenzhen, Guangdong 518129 (CN)
(72) Inventor: Chen ,Yi, Guangdong 518129 (CN)
(74) Representative: Haley, Stephen
(86) International application number: PCT/CN2011/075820
(87) International publication number: WO 2012/171205

(57) **Abstract**

A method and an apparatus for aligning a phased array antenna, and a phased array antenna are provided. A method for aligning a phased array antenna according to an embodiment of the present invention includes: receiving signals from respective antenna array subunits; performing phase shifting on the signals from the respective antenna array subunits, combining phase-shifted signals, where the signals are from the respective antenna array subunits, and obtaining a first signal, where a receiving beam corresponding to the first signal is a rotating receiving beam; rotating, by the rotating receiving beam, around a transmitting/receiving beam according to a preset angular frequency by using the transmitting/receiving beam as a rotation axis; calculating power values of respective first signals in a case that the rotating receiving beam rotates through different angles; and adjusting, according to the power values, a direction of the transmitting/receiving beam to align a phased array antenna.

## Description

### FIELD OF THE INVENTION

The present invention relates to the field of communication, and in particular, to a method and an apparatus for aligning a phased array antenna, and a phased array antenna.

### BACKGROUND OF THE INVENTION

Currently, in an antenna aligning method in the prior art, generally a conventional mechanical method is used manually to rotate an antenna, so as to adjust the antenna in a horizontal direction or a vertical direction, and meanwhile, strength of a signal received by the antenna is detected. When the detected strength of the signal reaches a certain range, it is regarded that the antenna is aligned.

Due to factors, such as aging of fasteners of the antenna and thermal expansion and contraction, antenna alignment changes to a certain extend, which causes quality of communication to deteriorate. For a high-frequency-band and high-gain antenna, because the width of the antenna main lobe is very narrow, in extreme conditions, such as a strong wind and a shock, the antenna may sway, and a transient or an unrecoverable service interruption may be caused. Therefore, labors are needed to maintain the antenna regularly or timely. Using the conventional mechanical method to rotate the antenna obviously cannot meet the needs of modem communication, because the inertia of the antenna is great, the precision is low, the degree of automation is low, and the speed is slow.

### SUMMARY OF THE INVENTION

Technical problems to be solved in embodiments of the present invention are to provide a method and an apparatus for aligning a phased array antenna, and a phased array antenna, which can precisely adjust a direction of a phased array antenna, and achieve a high degree of automation, thus dramatically increasing working efficiency of the phased array antenna.

In order to solve the foregoing technical problems, the embodiments of the present invention adopt the following technical solutions:
A method for aligning a phased array antenna includes:
   receiving signals from respective antenna array subunits;
   performing phase shifting on the signals from the respective antenna array subunits, combining phase-shifted signals, where the signals are from the respective antenna array subunits, and obtaining a first signal, where a receiving beam corresponding to the first signal is a rotating receiving beam;
   rotating, by the rotating receiving beam, around a transmitting/receiving beam according to a preset angular frequency by using the transmitting/receiving beam as a rotation axis;
   calculating power values of respective first signals in a case that the rotating receiving beam rotates through different angles; and
   adjusting, according to the power values, a direction of the transmitting/receiving beam to align a phased array antenna.

An apparatus for aligning a phased array antenna includes:
a rotating-receiving-beam forming unit, configured to receive signals from respective antenna array subunits; perform phase shifting on the signals from the respective antenna array subunits, combine phase-shifted signals, where the signals are from the respective antenna array subunits, and obtain a first signal, where a receiving beam corresponding to the first signal is a rotating receiving beam;
where the rotating receiving beam rotates around a transmitting/receiving beam according to a preset angular frequency by using the transmitting/receiving beam as a rotation axis;
a received-signal-power calculating unit, configured to calculate power values of respective first signals in a case that the rotating receiving beam rotates through different angles; and
a control unit, configured to adjust, according to the power values, a direction of the transmitting/receiving beam to align a phased array antenna.

A phased array antenna includes an antenna array unit, a transmitting/receiving beam forming unit, a duplexer, a digital signal processing unit, a radio frequency transmitting unit and a radio frequency receiving unit, where the antenna array unit includes multiple antenna array subunits, the transmitting/receiving beam forming unit is configured to transmit a signal to the antenna array unit and receive a signal received by the antenna array unit, where the phased array antenna further includes an apparatus for aligning a phased array antenna, and the apparatus for aligning a phased array antenna includes:
a rotating-receiving-beam forming unit, configured to receive signals from respective antenna array subunits; perform phase shifting on the signals from the respective antenna array subunits, combine phase-shifted signals, where the signals are from the respective antenna array subunits, and obtain a first signal, where a receiving beam corresponding to the first signal is a rotating receiving beam; the rotating receiving beam rotates around a transmitting/receiving beam according to a preset angular frequency by using the transmitting/receiving beam as a rotation axis;
a received-signal-power calculating unit, configured to calculate power values of respective first signals in a case that the rotating receiving beam rotates through different angles; and
a control unit, configured to adjust, according to the power values, a direction of the transmitting/receiving beam in the transmitting/receiving beam forming unit, to align a phased array antenna,
where the rotating-receiving-beam forming unit is connected with the transmitting/receiving beam forming unit, and the control unit is connected with the transmitting/receiving beam forming unit.

In the method for aligning a phased array antenna according to the embodiments of the present invention, the signals from the respective antenna array subunits are received, the phase shifting is performed on the signals from the respective antenna array subunits, the phase-shifted signals, where the signals are from the respective antenna array subunits, are combined, and the first signal is obtained. The receiving beam corresponding to the first signal is the rotating receiving beam. The rotating receiving beam rotates around the transmitting/receiving beam according to the preset angular frequency by using the transmitting/receiving beam as the rotation axis. Then, the power values of the respective first signals in the case that the rotating receiving beam rotates through different angles are calculated. Finally, according to the power values, the direction of the phased array antenna is adjusted. The direction of the phased array antenna can be adjusted precisely, the degree of automation is high, and thus the working efficiency of the phased array antenna is increased dramatically.

### BRIEF DESCRIPTION OF THE DRAWINGS

To illustrate the technical solutions according to the embodiments of the present invention or in the prior art more clearly, accompanying drawings required for describing the embodiments are introduced briefly in the following. Apparently, the accompanying drawings in the following description are only some embodiments of the present invention, and persons of ordinary skill in the art may further obtain other drawings from these accompanying drawings without creative efforts.
FIG. 1 is a first flow chart of a method for aligning a phased array antenna according to an embodiment of the present invention;
FIG. 2 is a first schematic structural diagram of an apparatus for aligning a phased array antenna according to an embodiment of the present invention;
FIG. 3 is a second schematic structural diagram of an apparatus for aligning a phased array antenna according to an embodiment of the present invention;
FIG. 4 is a schematic diagram of rotation of a rotating receiving beam according to an embodiment of the present invention;
FIG. 5 is a second flow chart of a method for aligning a phased array antenna according to an embodiment of the present invention;
FIG. 6 is a first schematic structural diagram of a phased array antenna according to an embodiment of the present invention;
FIG. 7 is a second schematic structural diagram of a phased array antenna according to an embodiment of the present invention; and
FIG. 8 is a schematic structural diagram of a rotating-receiving-beam forming unit according to an embodiment of the present invention.

### Description of marks of the accompanying drawings:

1. Rotating-receiving-beam forming unit, 11. Rotating receiving beam, 12. Phase shifter, 13. Power divider, 14. Beam direction control module, 2. Received-signal-power calculating unit, 3. Control unit, 4. Judging unit, 5. Transmitting/receiving beam forming unit, 6. Antenna array subunit, 7. Duplexer, 8. Digital signal processing unit, 9. RF transmitting unit, 10. RF receiving unit.

### DETAILED DESCRIPTION OF THE EMBODIMENTS

Embodiments of the present invention provide a method and an apparatus for aligning a phased array antenna, and a phased array antenna, which can precisely adjust a direction of a phased array antenna, achieve a high degree of automation, and achieve high precision aligning.

The embodiments of the present invention are described below in detail with reference to the accompanying drawings.

### Embodiment 1

A phased array antenna (Phased array antenna) is an antenna that uses an electronic control method to change a phase of a radiation unit in an array, so as to make a beam scan the space as required. The antenna changes the shape of a pattern by controlling a feed phase of the radiation unit in the array antenna. By controlling the phase, a direction of a maximum value of the pattern of the antenna may be changed, so as to achieve the objective of beam scanning. A pattern illustrates directional characteristics of antenna transmitting (or receiving) energy. Characteristics of antenna transmitting energy are shown by a transmission pattern, and characteristics of antenna receiving energy are shown by a reception pattern. Generally speaking, a transmission pattern of an antenna coincides with a reception pattern of the antenna with respect to the shape. A scan speed of a beam of a phased array antenna is high, a feed phase is controlled by a computer, and the rate of change of the phase is high (on the order of milliseconds). That is, change of a direction of the maximum value or another parameter of an antenna pattern is fast, which is the most distinguishing feature of the phased array antenna.

A common phased array antenna is mainly formed by an antenna array unit and a transmitting/receiving beam forming unit. The transmitting/receiving beam forming unit includes multiple phase shifters, a power divider and a beam direction control module. The antenna array unit is formed by multiple antenna array subunits arranged on a plane, and a function of the antenna array unit is to transmit a signal and receive a signal sent by a peer antenna. The phase shifters are configured to adjust phases of signals transmitted/received by every antenna array subunit. The power divider is configured to distribute a channel of a signal to respective phase shifters. The beam direction control module is configured to configure working parameters of the phase shifters and the power divider, so as to enable the antenna to form transmitting/receiving beams of the same direction.

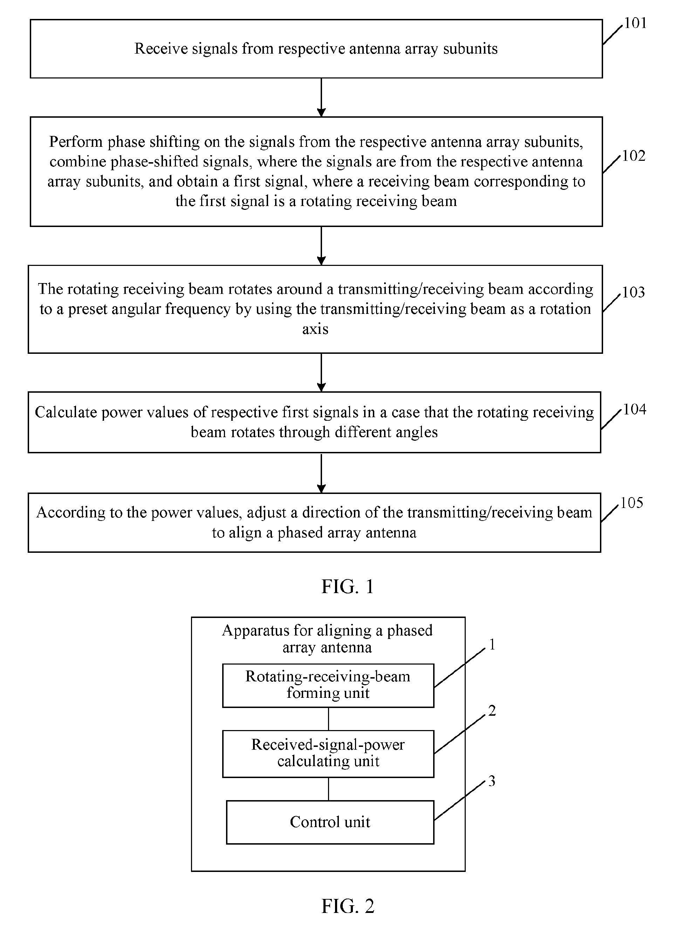

The embodiment provides a method for aligning a phased array antenna, and as shown in FIG. 1, the method includes:

Step 101: Receive signals from respective antenna array subunits.

During a work process of a phased array antenna, the multiple antenna array subunits of the antenna array unit receive a signal sent by a peer antenna. Differences from the prior art are that: The phased array antenna according to the embodiment is added with a rotating-receiving-beam forming unit that is independent of the transmitting/receiving beam forming unit. The rotating-receiving-beam forming unit and the transmitting/receiving beam forming unit receive signals from the antenna array subunits respectively. The signal here is generally a radio frequency (Radio Frequency, abbreviated as RF) signal.

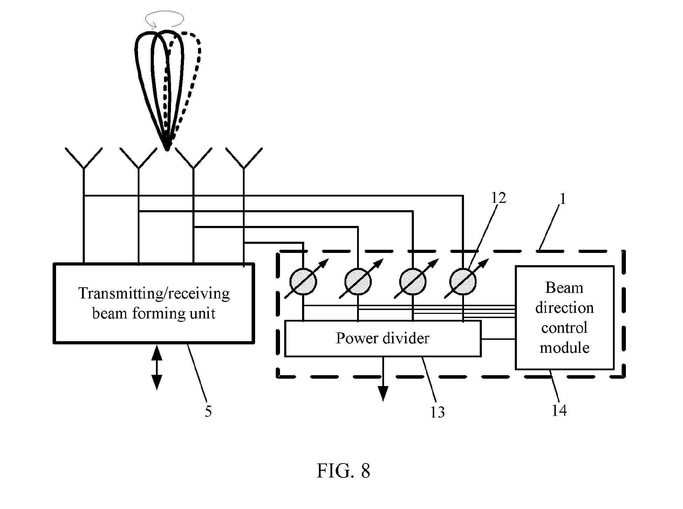

As shown in FIG. 8, in the embodiment, the rotating-receiving-beam forming unit includes: multiple phase shifters 12, a power divider 13 and a beam direction control module 14. The power divider 13 is configured to distribute a signal to respective phase shifters or combine signals from the respective phase shifters into a signal. The phase shifters 12 are configured to adjust phases of signals transmitted/received by the antenna array subunits. The beam direction control module 14 is configured to configure working parameters of the phase shifters 12 and the power divider 13, so as to enable the antenna to form rotating receiving beams of the same direction.

Step 102: Perform phase shifting on the signals from the respective antenna array subunits, combine phase-shifted signals, where the signals are from the respective antenna array subunits, and obtain a first signal, where a receiving beam corresponding to the first signal is a rotating receiving beam.

Alignment of antennas refers to that a direction of a transmitting/receiving beam of a peer antenna coincides with a direction of a transmitting/receiving beam of a local phased array antenna. In order to align the phased array antenna with the peer antenna, after the rotating-receiving-beam forming unit according to the embodiment receives the signals from the respective antenna array subunits, first the phase shifters perform phase shifting on the signals from the respective antenna array subunits, then the phase-shifted signals, where the signals are from the respective antenna array subunits, are combined, and the first signal is obtained. The receiving beam corresponding to the first signal is the rotating receiving beam, and the rotating receiving beam and the local transmitting/receiving beam form an included angle of certain degrees.

Step 103: The rotating receiving beam rotates around the transmitting/receiving beam according to a preset angular frequency by using the transmitting/receiving beam as a rotation axis.

In the embodiment, the beam direction control module 14 of the rotating-receiving-beam forming unit is further configured to continuously change, by controlling the phase shifters 12, a direction of a rotating receiving beam formed by the rotating-receiving-beam forming unit, so as to achieve a technical effect that the rotating-receiving-beam forming unit can receive signals of different directions, that is, to make the rotating receiving beam rotate around the transmitting/receiving beam according to the preset angular frequency by using the transmitting/receiving beam as the rotation axis.

It should be noted that, in the embodiment, the transmitting/receiving beam generally refers to a shape of a pattern formed when the transmitting/receiving beam forming unit receives a signal, and the rotating receiving beam refers to a shape of a pattern formed when the rotating-receiving-beam forming unit receives a signal. If not specifically noted, the transmitting/receiving beam refers to the local transmitting/receiving beam.

Step 104: Calculate power values of respective first signals in a case that the rotating receiving beam rotates through different angles.

The respective first signals in the case that the rotating receiving beam rotates through different angles refer to signals which are from respective directions and received by the rotating-receiving-beam forming unit when the phases adjusted by the phase shifters are changed continuously. Then, the power values of the signals from respective directions are calculated.

Step 105: According to the power values, adjust a direction of the transmitting/receiving beam to align the phased array antenna.

Power of signals sent by the peer antenna are approximately equal on a section that is perpendicular to the direction of the transmitting/receiving beam of the peer antenna, so that when the peer antenna is aligned with the local phased array antenna, in the embodiment, the calculated power values of the respective first signals in different rotation angles are equal. When the peer antenna is not aligned with the local phased array antenna, the obtained power values of the respective first signals in different rotation angles are not equal, and change continuously according to a certain rule.

In the embodiment, it is judged according to the calculated power values whether the phased array antenna is aligned. When it is judged that the phased array antenna is not aligned, a deviation direction of the transmitting/receiving beam of the phased array antenna may be further calculated according to the calculated and obtained power values. For example, the calculated and obtained power values are compared, a direction corresponding to a smallest power value is usually the deviation direction of the transmitting/receiving beam. During an adjustment, the direction of the transmitting/receiving beam is required to be adjusted to a direction corresponding to a large power value. Then, the beam direction control module of the transmitting/receiving beam forming unit is controlled to further control the phase shifters and the power divider to adjust the direction of the local transmitting/receiving beam, so as to align the local phased array antenna with the peer antenna.

In the method for aligning a phased array antenna according to the embodiment of the present invention, the signals from the respective antenna array subunits, are received, the phase shifting is performed on the signals from the respective antenna array subunits, the phase-shifted signals, where the signals are from the respective antenna array subunits, are combined, and the first signal is obtained. The receiving beam corresponding to the first signal is the rotating receiving beam. The rotating receiving beam rotates around the transmitting/receiving beam according to the preset angular frequency by using the transmitting/receiving beam as the rotation axis. Then, the power values of the respective first signals in the case that the rotating receiving beam rotates through different angles are calculated. Finally, according to the power values, the direction of the phased array antenna is adjusted. The direction of the phased array antenna can be adjusted precisely, the degree of automation is high, and the working efficiency of the phased array antenna is increased dramatically.

### Embodiment 2

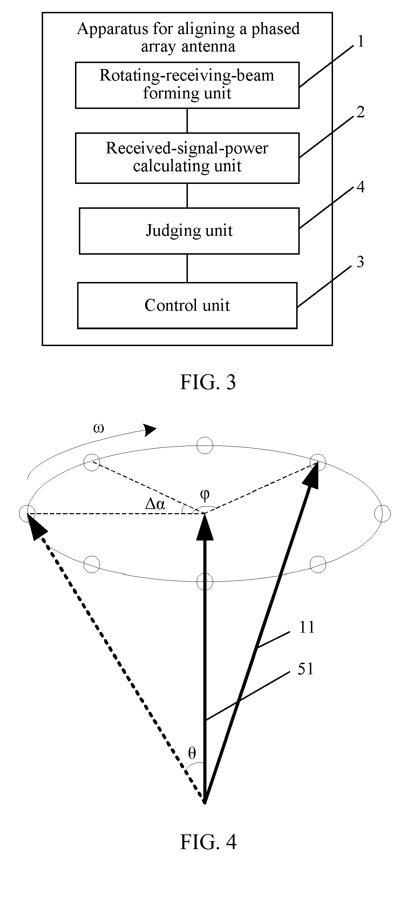

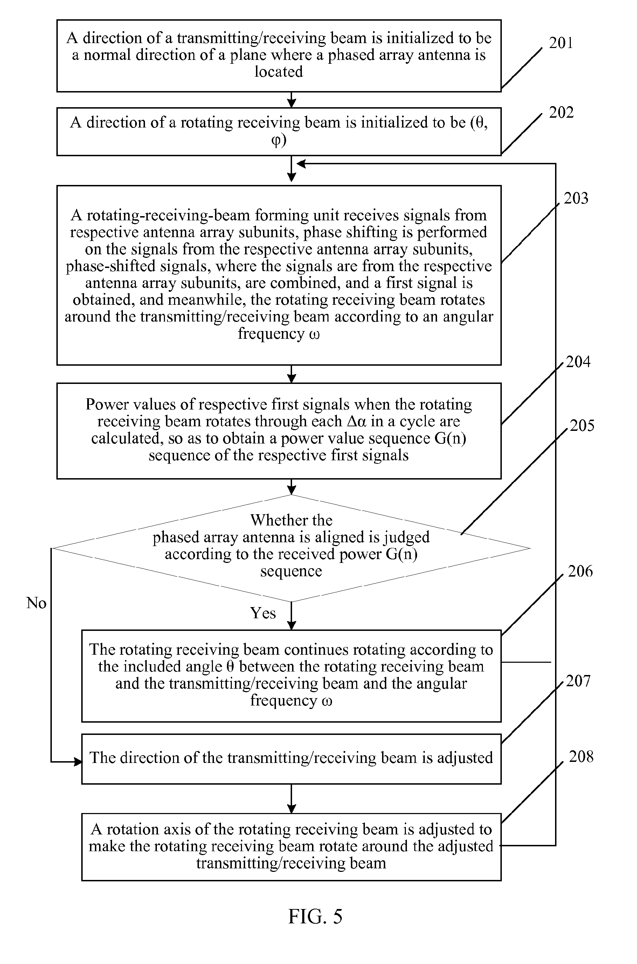

The embodiment provides a method for aligning a phased array antenna, and as shown in FIG. 4 and FIG. 5, the method includes:

Step 201: A direction of a transmitting/receiving beam is initialized to be a normal direction of a plane where a phased array antenna is located. Here, the direction of a transmitting/receiving beam 51 is the direction of the phased array antenna.

Step 202: A direction of a rotating receiving beam 11 is initialized to be (θ, ϕ), where, θ represents an included angle between the rotating receiving beam 11 and the transmitting/receiving beam 51, that is, a deflection angle relative to the transmitting/receiving beam 51, and in the embodiment, θ is greater than 0° and a preferred value range is 0<θ<90°; ϕ represents an angle through which the rotating receiving beam 11 rotates from an initial state to the present, ϕ = ω × t, and t represents total time the rotating receiving beam 11 rotates.

When the included angle θ between the receiving beam and the local transmitting/receiving beam is a determined value, if the width of the antenna main lobe is relatively great, fluctuations of collected data are relatively small, so that in order to avoid misjudgment, when the width of the antenna main lobe is relatively great, θ is generally set to a relatively large value; similarly, when the width of the antenna main lobe is relatively small, θ is generally set to a relatively small value. In summary, the value of θ is required to fit the width of the antenna main lobe.

Further, in the embodiment, it is set that the rotating receiving beam 11 rotates for several rotations to complete a cycle, and in the embodiment, it is set that one rotation is a cycle.

Step 203: A rotating-receiving-beam forming unit receives signals from respective antenna array subunits. Phase shifting is performed on the signals from the respective antenna array subunits, phase-shifted signals, where the signals are from the respective antenna array subunits, are combined, and a first signal is obtained. Meanwhile, the rotating receiving beam rotates around the transmitting/receiving beam according to an angular frequency ω.

In the embodiment of the present invention, the rotating-receiving-beam forming unit only receives signals, and does not send any signal.

The rotating receiving beam is formed by the rotating-receiving-beam forming unit during signal reception. The rotating-receiving-beam forming unit includes: multiple phase shifters, a power divider and a beam direction control module. The power divider is configured to distribute a channel of a signal to respective phase shifters or combine signals from the respective phase shifters into a channel of a signal to obtain the first signal. The phase shifters are configured to adjust phases of signals transmitted/received by every antenna array subunit. The beam direction control module is configured to configure working parameters of the phase shifters and the power divider, so as to enable the antenna to form rotating receiving beams of the same direction.

In the embodiment, the beam direction control module is further configured to continuously change, by controlling working of the phase shifters, a direction of a rotating receiving beam formed by the rotating-receiving-beam forming unit, so as to further achieve a technical effect that the rotating-receiving-beam forming unit can receive signals of different directions.

Step 204: Power values of respective first signals when the rotating receiving beam rotates through each Δα in a cycle are calculated, so as to obtain a power value sequence G(n) sequence of the respective first signals, where n is a positive integer, and Δα represents an included angle between each two adjacent positions of the rotating receiving beam 11. Δα = ω × (t - t'), and t' represents a time point after a rotation of a previous Δα is completed, so that the G(n) sequence is in fact a time-dependent sequence of number.

Step 205: Whether the phased array antenna is aligned is judged according to the received power G(n) sequence.

Power of signals sent by the peer antenna are approximately equal on a section that is perpendicular to the direction of the transmitting/receiving beam 51 of the peer antenna, so that when the peer antenna is aligned with the local phased array antenna, in the embodiment, values of the calculated power value sequence G(n) sequence of the respective first signals in different rotation angles are substantially the same, that is, fluctuations of respective power values of the G(n) sequence are smaller than or equal to a preset threshold value. When the peer antenna is not aligned with the local phased array antenna, fluctuations of the respective power values of the obtained power value sequence G(n) sequence of the respective first signals in different rotation angles are greater than the preset threshold value, and change continuously according to a certain rule.

Step 206: If the values of the G(n) sequence are equal, it is judged that the phased array antenna is aligned, and the rotating receiving beam 11 continues rotating according to the included angle θ between the rotating receiving beam 11 and the transmitting/receiving beam 51 and the angular frequency ω.

Further, in order to save the power and extend the service life of the rotating-receiving-beam forming unit, in the embodiment, it may be set that: After it is judged that the phased array antenna is aligned, the rotating receiving beam 11 continues to rotate around the adjusted transmitting/receiving beam 51 after stop working for a period of time.

Step 207: If the values of the G(n) sequence are not equal, it is judged that the phased array antenna is not aligned, and the direction of the transmitting/receiving beam 51 is adjusted.

After it is judged that the phased array antenna is not aligned, in the embodiment, a deviation direction of the transmitting/receiving beam 51 of the phased array antenna may be further calculated. Then, the beam direction control module of the transmitting/receiving beam forming unit is controlled to further control the phase shifters and the power divider to adjust the direction of the local transmitting/receiving beam 51, so as to align the local phased array antenna with the peer antenna.

Step 208: A rotation axis of the rotating receiving beam 11 is adjusted to make the rotating receiving beam 11 rotate around the adjusted transmitting/receiving beam 51.

After the direction of the transmitting/receiving beam 51 is adjusted, it cannot be determined whether the adjusted phased array antenna is aligned, so that the rotating receiving beam 11 is required to continue rotating around the adjusted transmitting/receiving beam 51, and step 203 is repeated until the phased array antenna is aligned.

In the method for aligning a phased array antenna according to the embodiment of the present invention, the signals from the respective antenna array subunits are received, the phase shifting is performed on the signals from the respective antenna array subunits, the phase-shifted signals, where the signals are from the respective antenna array subunits, are combined, and the first signal is obtained. The receiving beam corresponding to the first signal is the rotating receiving beam. The rotating receiving beam rotates around the transmitting/receiving beam according to the preset angular frequency by using the transmitting/receiving beam as the rotation axis. Then, the power values of the respective first signals in a case that the rotating receiving beam rotates through different angles are calculated. Finally, according to the power values, the direction of the phased array antenna is adjusted. The direction of the phased array antenna can be adjusted precisely, and the degree of automation is high. Further, antenna alignment is achieved through the rotating-receiving-beam forming unit that is independent of the transmitting/receiving beam forming unit, thus not affecting normal operation of the transmitting/receiving beam forming unit and dramatically increasing the working efficiency of the phased array antenna.

### Embodiment 3

The embodiment provides an apparatus for aligning a phased array antenna, and as shown in FIG. 2 and FIG. 3, the apparatus includes a rotating-receiving-beam forming unit 1, a received-signal-power calculating unit 2 and a control unit 3.

The rotating-receiving-beam forming unit 1 is configured to receive signals from respective antenna array subunits; perform phase shifting on the signals from the respective antenna array subunits, combine phase-shifted signals, where the signals are from the respective antenna array subunits, and obtain a first signal. A receiving beam corresponding to the first signal is a rotating receiving beam.

The rotating receiving beam rotates around a transmitting/receiving beam according to a preset angular frequency by using the transmitting/receiving beam as a rotation axis.

As shown in FIG. 8, the rotating-receiving-beam forming unit according to the embodiment includes: multiple phase shifters 12, a power divider 13 and a beam direction control module 14. The power divider 13 is configured to distribute a channel of a signal to respective phase shifters 12 or combine signals from the respective phase shifters 12 into a channel of a signal to obtain the first signal. The phase shifters 12 are configured to adjust phases of signals transmitted/received by every antenna array subunit. The beam direction control module 14 is configured to configure working parameters of the phase shifters 12 and the power divider 13, so as to enable the antenna to form rotating receiving beams of the same direction.

In the embodiment, the beam direction control module is further configured to continuously change, by controlling working of the phase shifters, a direction of a rotating receiving beam formed by the rotating-receiving-beam forming unit, so as to further achieve a technical effect that the rotating-receiving-beam forming unit can receive signals of different directions.

During a work process of the phased array antenna, the antenna array subunits receive a signal sent by a peer antenna, and then the transmitting/receiving beam forming unit receives the signals from the respective antenna array subunits. In order to align the phased array antenna with the peer antenna, in the embodiment, after receiving the signals from the respective antenna array subunits, the rotating-receiving-beam forming unit 1 continuously change the direction of the rotating receiving beam formed by the rotating-receiving-beam forming unit, so that the rotating receiving beam rotates around the transmitting/receiving beam according to the preset angular frequency by using the transmitting/receiving beam as the rotation axis to rotationally receive the signals from the respective antenna array subunits. The rotating receiving beam formed by the rotating-receiving-beam forming unit 1 and the transmitting/receiving beam form an included angle of certain degrees. The included angle of certain degrees is greater than 0°, and a preferred range is 0°<θ<90°.

The received-signal-power calculating unit 2 is configured to calculate power values of respective first signals in a case that the rotating receiving beam rotates through different angles.

The control unit 3 is configured to adjust the direction of the transmitting/receiving beam according to the power values. Here, the direction of a transmitting/receiving beam is the direction of the phased array antenna.

Power of signals sent by the peer antenna are approximately equal on a section that is perpendicular to the direction of the transmitting/receiving beam of the peer antenna, so that when the peer antenna is aligned with the local phased array antenna, in the embodiment, the power values of the signals in different rotation angles, where the power values are calculated by the received-signal-power calculating unit 2, and the signals are received from the respective antenna array subunits, are substantially equal. Taking into account the inevitable error in actual measurement, it is regarded that the antenna is aligned when fluctuations of the power values are smaller than or equal to a preset threshold value. When the peer antenna is not aligned with the local phased array antenna, fluctuations of the power values of the signals in different rotation angles, where the power values are calculated and obtained by the received-signal-power calculating unit 2, and the signals are received from the respective antenna array subunits, are greater than the preset threshold value, and change continuously according to a certain rule.

The width of the antenna main lobe refers to an included angle between two half-power level points on the main lobe in the pattern. The two half-power level points are points where field strength decreases from a maximum value to 0.707 times the maximum value, which reflects the degree of concentration of antenna radiation energy. The width of the main lobe varies as the antenna varies. When the included angle of the receiving beam and the local transmitting/receiving beam is a determined value, if the width of the antenna main lobe is relatively great, fluctuations of collected data are relatively small, so that in order to avoid misjudgment, when the width of the antenna main lobe is relatively great, the included angle between the rotating receiving beam and the local transmitting/receiving beam is generally set to a relatively large value; similarly, when the width of the antenna main lobe is relatively small, the included angle between the rotating receiving beam and the local transmitting/receiving beam is generally set to a relatively small value. In summary, the included angle between the receiving beam formed by the rotational reception and the local transmitting/receiving beam is required to fit the width of the antenna main lobe.

In the embodiment, the apparatus for aligning a phased array antenna further includes a judging unit 4, configured to judge, according to the power values, whether the transmitting/receiving beam is aligned. If the fluctuations of the power values of the signals in different rotation angles, where the signals are received from the respective antenna array subunits, are smaller than or equal to the preset threshold value, it is judged that the transmitting/receiving beam is aligned; if the fluctuations of the power values of the signals in different rotation angles, where the signals are received from the respective antenna array subunits, are greater than the preset threshold value, it is judged that the transmitting/receiving beam is not aligned.

In the embodiment, according to the power values calculated and obtained by the received-signal-power calculating unit 2, the judging unit 4 judges whether the phased array antenna is aligned. When it is judged that the phased array antenna is not aligned, the received-signal-power calculating unit 2 may further calculate a derivation direction of the transmitting/receiving beam of the phased array antenna according to the calculated and obtained power values. The control unit 3 controls the beam direction control module of the transmitting/receiving beam forming unit to further control the phase shifters and the power divider, to adjust the direction of the local transmitting/receiving beam, so as to align the local phased array antenna with the peer antenna.

In the apparatus for aligning a phased array antenna according to the embodiment of the present invention, the rotating-receiving-beam forming unit that is independent of the transmitting/receiving beam forming unit receives the signals from the respective antenna array subunits. The phase shifting is performed on the signals from the respective antenna array subunits, the phase-shifted signals, where the signals are from the respective antenna array subunits, are combined, and the first signal is obtained. The receiving beam corresponding to the first signal is the rotating receiving beam. The rotating receiving beam rotates around the transmitting/receiving beam according to the preset angular frequency by using the transmitting/receiving beam as the rotation axis. Then, the power values of the respective first signals in the case that the rotating receiving beam rotates through different angles are calculated. Finally, according to the power values, the direction of the phased array antenna is adjusted. The direction of the phased array antenna can be adjusted precisely, and the degree of automation is high. During the process of antenna alignment, normal operation of the transmitting/receiving beam forming unit is not affected, the precision is high, and the working efficiency of the phased array antenna is increased dramatically.

### Embodiment 4

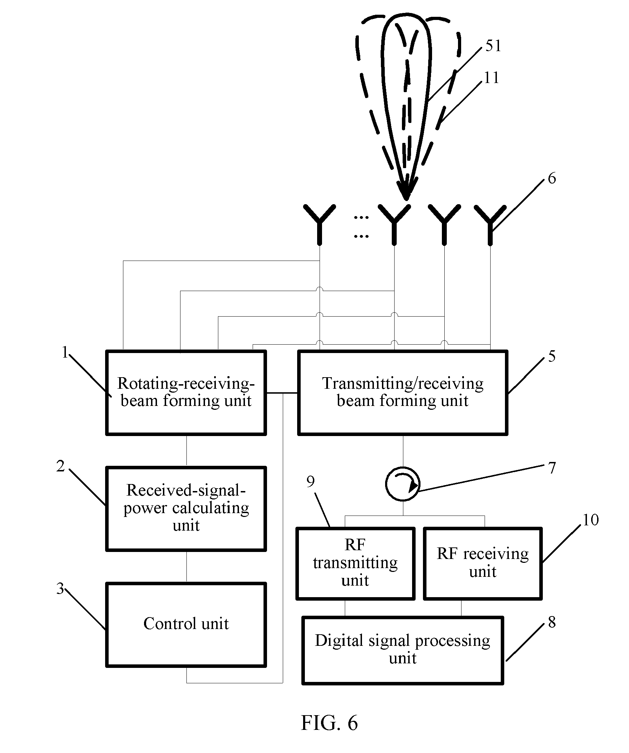

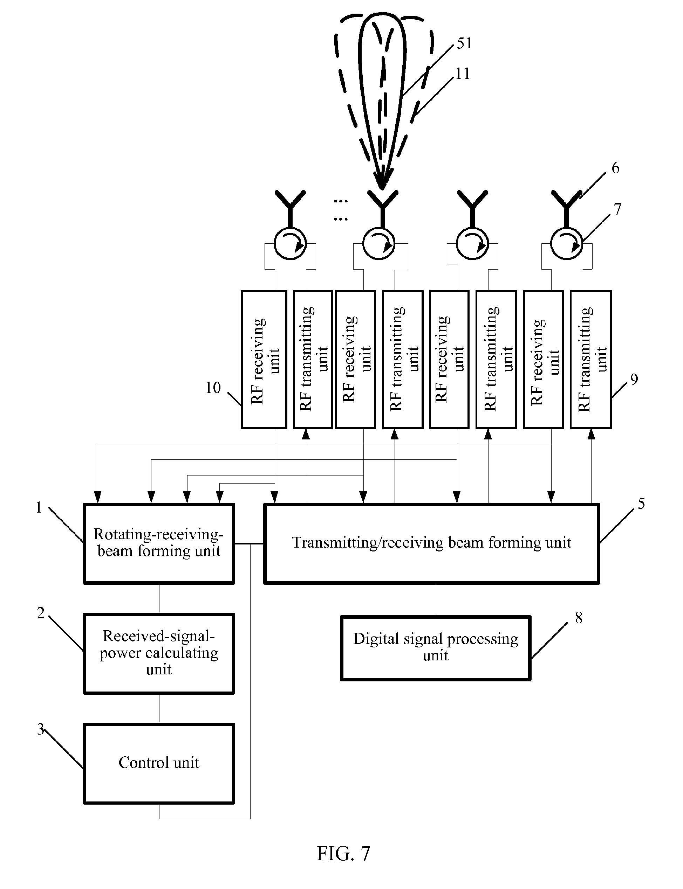

The embodiment provides a phased array antenna, which, as shown in FIG. 6 and FIG. 7, includes an antenna array unit, a transmitting/receiving beam forming unit 5, a duplexer 7, a digital signal processing unit 8, a radio frequency transmitting unit 9 and a radio frequency receiving unit 10. The antenna array unit includes multiple antenna array subunits 6. The transmitting/receiving beam forming unit 5 is configured to transmit a signal to the antenna array unit and receive a signal received by the antenna array unit.

Generally, the transmitting/receiving beam forming unit 5 includes multiple phase shifters, a power divider and a beam direction control module. The antenna array unit is formed by the multiple antenna array subunits 6 arranged on a plane, and a function of the antenna array unit is to transmit a signal and receive a signal sent by a peer antenna. The phase shifters are configured to adjust phases of signals transmitted/received by every antenna array subunit 6. The power divider is configured to distribute a channel of a signal to respective phase shifters or combine signals from the respective phase shifters into a channel of a signal. The beam direction control module is configured to configure working parameters of the phase shifters and the power divider, so as to enable the antenna to form transmitting/receiving beams of the same direction.

In the phased array antenna, a function of the duplexer 7 is to isolate a transmitted signal from a received signal, so as to ensure normal operation of both the receiving of a signal and the transmitting of a signal. A function of the radio frequency transmitting unit 9 is to perform filtering, amplification and up conversion (Up conversion) on the signal. A function of the radio frequency receiving unit 10 is to perform filtering, amplification, and down conversion (Down conversion) on the signal. A function of the digital signal processing unit 8 is to perform further processing, such as modulation and demodulation, on the signal. The up conversion refers to a process in which an input signal of a frequency is converted to an output signal of a higher frequency (normally information contents and a modulation manner of the signal are not changed). The down conversion refers to a process in which an input signal of a frequency is converted to an output signal of a lower frequency (normally information contents and a modulation manner of the signal are not changed).

In the embodiment, the phased array antenna further includes an apparatus for aligning a phased array antenna. The apparatus for aligning a phased array antenna includes: a rotating-receiving-beam forming unit 1, a received-signal-power calculating unit 2 and a control unit 3.

The rotating-receiving-beam forming unit 1 is configured to receive signals from respective antenna array subunits 6; perform phase shifting on the signals from the respective antenna array subunits 6, combine phase-shifted signals, where the signals are from the respective antenna array subunits 6, and obtain a first signal. A receiving beam corresponding to the first signal is a rotating receiving beam. The rotating receiving beam rotates around a transmitting/receiving beam according to a preset angular frequency by using the transmitting/receiving beam as a rotation axis. The received-signal-power calculating unit 2 is configured to calculate power values of respective first signals in a case that the rotating receiving beam rotates through different angles. The control unit 3 is configured to adjust a direction of the transmitting/receiving beam 51 in the transmitting/receiving beam forming unit 5 according to the power values. The rotating-receiving-beam forming unit 1 is connected with the transmitting/receiving beam forming unit 5. The control unit 3 is connected with the transmitting/receiving beam forming unit 5.

As shown in FIG. 8, in the embodiment, the rotating-receiving-beam forming unit 1 includes: multiple phase shifters 12, a power divider 13 and a beam direction control module 14. The power divider 13 is configured to distribute a channel of a signal to respective phase shifters 12 or combine signals from the respective phase shifters 12 into a channel of a signal to obtain the first signal. The phase shifters 12 are configured to adjust phases of signals transmitted/received by every antenna array subunit. The beam direction control module 14 is configured to configure working parameters of the phase shifters 12 and the power divider 13, so as to enable the antenna to form rotating receiving beams of the same direction.

As an implementation manner of the embodiment, as shown in FIG. 6, the rotating-receiving-beam forming unit 1 and the transmitting/receiving beam forming unit 5 are connected with the antenna array unit respectively, and the duplexer 7 is connected with the transmitting/receiving beam forming unit 5. The radio frequency transmitting unit 9 and the radio frequency receiving unit 10 are connected with the duplexer 7 and the digital signal processing unit 8 respectively. A signal received by the antenna array unit enters the rotating-receiving-beam forming unit 1 and the transmitting/receiving beam forming unit 5 respectively, so that in the implementation manner, the rotating-receiving-beam forming unit 1 not only is configured to rotationally receive the signal received by the antenna array unit, but also has a signal analog-to-digital conversion function.

As another implementation manner of the embodiment, as shown in FIG. 7, the antenna array unit is connected with the duplexer 7, the duplexer 7 is connected with the radio frequency transmitting unit 9 and the radio frequency receiving unit 10 respectively, and the rotating-receiving-beam forming unit 1 is connected with the radio frequency receiving unit 10. The radio frequency transmitting unit 9 and the radio frequency receiving unit 10 are connected with the transmitting/receiving beam forming unit 5. The transmitting/receiving beam forming unit 5 is connected with the digital signal processing unit 8. A signal received by the antenna array unit, after being filtered and amplified by the radio frequency receiving unit 10, enters the rotating-receiving-beam forming unit 1.

The rotating-receiving-beam forming unit 1 receives the signals from the respective antenna array subunits 6; performs phase shifting on the signals from the respective antenna array subunits 6, combines phase-shifted signals, where the signals are from the respective antenna array subunits 6, and obtain a first signal. A receiving beam corresponding to the first signal is a rotating receiving beam. The rotating receiving beam rotates around the transmitting/receiving beam according to the preset angular frequency by using the transmitting/receiving beam as the rotation axis. The rotating receiving beam formed by the rotating-receiving-beam forming unit 1 by receiving the signal and the transmitting/receiving beam form an included angle of certain degrees. The included angle of certain degrees is greater than 0°, and a preferred range is 0°<θ<90°.

Power of signals sent by the peer antenna are approximately equal on a section that is perpendicular to the direction of the transmitting/receiving beam of the peer antenna, so that when the peer antenna is aligned with the local phased array antenna, in the embodiment, fluctuations of the power values of the signals in different rotation angles, where the power values are calculated by the received-signal-power calculating unit 2, and the signals are received from the respective antenna array subunits 6, are smaller than or equal to a preset threshold value. When the peer antenna is not aligned with the local phased array antenna, fluctuations of the power values of the signals in different rotation angles, where the power values are calculated by the received-signal-power calculating unit 2, and the signals are received from the respective antenna array subunits 6, are greater than the preset threshold value, and change continuously according to a certain rule.

In the embodiment, the received-signal-power calculating unit 2 further calculates a deviation direction of the transmitting/receiving beam of the phased array antenna. The control unit 3 controls the beam direction control module of the transmitting/receiving beam forming unit to further control the phase shifters and the power divider, to adjust the direction of the local transmitting/receiving beam, so as to align the local phased array antenna with the peer antenna.

The structure and work process of the apparatus for aligning a phased array antenna according to the embodiment is similar to those in the second embodiment and the third embodiment, and are not repeatedly described here.

In the phased array antenna according to the embodiment, the rotating-receiving-beam forming unit that is independent of the transmitting/receiving beam forming unit receives the signals from the respective antenna array subunits. The phase shifting is performed on the signals from the respective antenna array subunits, the phase-shifted signals, where the signals are from the respective antenna array subunits, are combined, and the first signal is obtained. The receiving beam corresponding to the first signal is the rotating receiving beam. The rotating receiving beam rotates around the transmitting/receiving beam according to the preset angular frequency by using the transmitting/receiving beam as the rotation axis. Then, the power values of the respective first signals in the case that the rotating receiving beam rotates through different angles are calculated. Finally, according to the power values, the direction of the phased array antenna is adjusted. The direction of the phased array antenna can be adjusted precisely, and the degree of automation is high. During the antenna alignment, normal operation of the transmitting/receiving beam forming unit is not affected, the precision is high, and the working efficiency of the phased array antenna is increased dramatically.

Through the foregoing description of the implementation manners, persons skilled in the art may clearly understand that the present invention may be implemented through software plus a necessary universal hardware platform, or certainly through hardware. But in many cases, the former is a preferred implementation manner. Based on such understanding, the foregoing technical solutions or the part that makes contributions to the prior art can be substantially embodied in the form of a software product. The computer software product may be stored in a readable storage medium such as a floppy disk, a hard disk, or an optical disk of a computer, and contain several instructions to instruct a computer device (for example, a personal computer, a server, or a network device) to execute the method described in the embodiments of the present invention.

The foregoing descriptions are merely specific implementation manners of the present invention, but are not intended to limit the protection scope of the present invention. Any modification or replacement that may be easily derived by persons skilled in the art within the technical scope disclosed in the present invention shall fall within the protection scope of the present invention. Therefore, the protection scope of the present invention should be subject to the protection scope of the claims.

## Claims

1. A method for aligning a phased array antenna, comprising:
receiving signals from respective antenna array subunits;
performing phase shifting on the signals from the respective antenna array subunits, combining phase-shifted signals, wherein the signals are from the respective antenna array subunits, and obtaining a first signal, wherein a receiving beam corresponding to the first signal is a rotating receiving beam;
rotating, by the rotating receiving beam around a transmitting/receiving beam according to a preset angular frequency by using the transmitting/receiving beam as a rotation axis;
calculating power values of respective first signals in a case that the rotating receiving beam rotates through different angles; and
adjusting, according to the power values, a direction of the transmitting/receiving beam to align a phased array antenna.

2. The method for aligning a phased array antenna according to claim 1, wherein after the calculating the power values of the respective first signals in the case that the rotating receiving beam rotates through different angles and before the adjusting the direction of the transmitting/receiving beam according to the power values, the method further comprises:
judging, according to the power values, whether the transmitting/receiving beam is aligned,
judging that the transmitting/receiving beam is aligned if fluctuations of the power values of the respective first signals in the case that the rotating receiving beam rotates through different angles are smaller than or equal to a preset threshold value; and
judging that the transmitting/receiving beam is not aligned if the fluctuations of the power values of the respective first signals in the case that the rotating receiving beam rotates through different angles are greater than the preset threshold value.

3. The method for aligning a phased array antenna according to claim 1, wherein the rotating receiving beam and the transmitting/receiving beam form an included angle of certain degrees.

4. The method for aligning a phased array antenna according to claim 3, wherein the included angle of certain degrees is greater than 0°.

5. The method for aligning a phased array antenna according to claim 1, wherein the direction of the transmitting/receiving beam is a direction of the phased array antenna.

6. The method for aligning a phased array antenna according to claim 1, wherein before the receiving the signals from the respective antenna array subunits, the method further comprises:
initializing the direction of the transmitting/receiving beam to be a normal direction of a plane where the phased array antenna is located; and
initializing the included angle between the rotating receiving beam and the transmitting/receiving beam.

7. An apparatus for aligning a phased array antenna, comprising:
a rotating-receiving-beam forming unit, configured to receive signals from respective antenna array subunits; perform phase shifting on the signals from the respective antenna array subunits, combine phase-shifted signals, wherein the signals are from the respective antenna array subunits, and obtain a first signal, wherein a receiving beam corresponding to the first signal is a rotating receiving beam;
wherein the rotating receiving beam rotates around a transmitting/receiving beam according to a preset angular frequency by using the transmitting/receiving beam as a rotation axis;
a received-signal-power calculating unit, configured to calculate power values of respective first signals in a case that the rotating receiving beam rotates through different angles; and
a control unit, configured to adjust, according to the power values, a direction of the transmitting/receiving beam to align a phased array antenna.

8. The apparatus for aligning a phased array antenna according to claim 7, further comprising:
a judging unit, configured to judge, according to the power values, whether the transmitting/receiving beam is aligned,
wherein it is judged that the transmitting/receiving beam is aligned if fluctuations of the power values of the respective first signals in the case that the rotating receiving beam rotates through different angles are smaller than or equal to a preset threshold value; and
it is judged that the transmitting/receiving beam is not aligned if the fluctuations of the power values of the respective first signals in the case that the rotating receiving beam rotates through different angles are greater than the preset threshold value.

9. The apparatus for aligning a phased array antenna according to claim 7, wherein the rotating receiving beam and the transmitting/receiving beam form an included angle of certain degrees.

10. The apparatus for aligning a phased array antenna according to claim 9, wherein the included angle of certain degrees is greater than 0°.

11. The apparatus for aligning a phased array antenna according to claim 7, wherein the direction of the transmitting/receiving beam is a direction of the phased array antenna.

12. The apparatus for aligning a phased array antenna according to claim 7, wherein the rotating-receiving-beam forming unit comprises multiple phase shifters, a power divider and a beam direction control module.

13. A phased array antenna, comprising an antenna array unit, a transmitting/receiving beam forming unit, a duplexer, a digital signal processing unit, a radio frequency transmitting unit and a radio frequency receiving unit, wherein the antenna array unit comprises multiple antenna array subunits, the transmitting/receiving beam forming unit is configured to transmit a signal to the antenna array unit and receive a signal received by the antenna array unit, wherein the phased array antenna further comprises an apparatus for aligning a phased array antenna, and the apparatus for aligning a phased array antenna comprises:
a rotating-receiving-beam forming unit, configured to receive signals from respective antenna array subunits; perform phase shifting on the signals from the respective antenna array subunits, combine phase-shifted signals, wherein the signals are from the respective antenna array subunits, and obtain a first signal, wherein a receiving beam corresponding to the first signal is a rotating receiving beam; the rotating receiving beam rotates around a transmitting/receiving beam according to a preset angular frequency by using the transmitting/receiving beam as a rotation axis;
a received-signal-power calculating unit, configured to calculate power values of respective first signals in a case that the rotating receiving beam rotates through different angles; and
a control unit, configured to adjust, according to the power values, a direction of the transmitting/receiving beam in the transmitting/receiving beam forming unit, to align a phased array antenna,
wherein the rotating-receiving-beam forming unit is connected with the transmitting/receiving beam forming unit, and the control unit is connected with the transmitting/receiving beam forming unit.

14. The phased array antenna according to claim 13, wherein the rotating-receiving-beam forming unit and the transmitting/receiving beam forming unit are connected with the antenna array unit respectively, and the duplexer is connected with the transmitting/receiving beam forming unit.

15. The phased array antenna according to claim 13, wherein the antenna array unit is connected with the duplexer, the duplexer is connected with the radio frequency transmitting unit and the radio frequency receiving unit respectively, and the rotating-receiving-beam forming unit is connected with the radio frequency receiving unit.
